# FASCICULE DE BREVET EUROPEEN

(11) **EP 2 409 225 B1**
(45) Date de publication et mention de la délivrance du brevet: **31.10.2018**
(21) Numéro de dépôt: 10708332.1
(22) Date de dépôt: 11.02.2010
(51) Int. Cl.: G06F 9/445

(54) **PROCEDE DE PRISE EN COMPTE DE PARAMETRES DE CONFIGURATION PAR LE LOGICIEL D'UN CALCULATEUR EMBARQUE A BORD D'UN VEHICULE**
VERFAHREN FÜR DIE SOFTWARE EINES COMPUTERS AN BORD EINES FAHRZEUGS ZUM BERÜCKSICHTIGEN VON KONFIGURATIONSPARAMETERN
METHOD FOR THE SOFTWARE OF A COMPUTER ONBOARD A VEHICLE TO TAKE CONFIGURATION PARAMETERS INTO ACCOUNT

(30) Priorité: 18.03.2009 FR 0951741
(43) Date de publication de la demande: 25.01.2012
(73) Titulaire: PSA Automobiles SA, 78300 Poissy (FR)
(72) Inventeur: LOPEZ, Thierry, F-78700 Conflans-Sainte-Honorine (FR)
(74) Mandataire: Ménès, Catherine
(86) Numéro de dépôt international: PCT/FR2010/050235
(87) Numéro de publication internationale: WO 2010/106258

(56) Documents cités:
- US-A1- 2002 089 883
- US-A1- 2008 209 116
- US-B1- 6 810 292

## Description

La présente invention concerne un procédé de prise en compte de paramètres de configuration par le logiciel d'un calculateur embarqué à bord d'un véhicule, tel qu'un véhicule automobile, au cours de sa fabrication.

On connait du document US6810292B1 une méthode de mémorisation non volatile de données et du document US2008/209116A1 un appareil de stockage de données.

Le déploiement de fonctions électroniques complexes au sein des véhicules modernes et les exigences liées à l'industrialisation de ces véhicules, avec en particulier la demande de réduction des temps de montage, sont souvent antagonistes. Cette difficulté est encore accentuée par une demande croissante de qualité du produit imposant notamment le renforcement des contrôles destinés à garantir la conformité des véhicules livrés au client.

Notamment, une procédure nécessaire à la bonne marche du système, appelée procédure « power-latch » (ou d'endormissement d'un calculateur), peut ralentir de façon importante la fabrication des véhicules.

La procédure de power-latch est une phase pendant laquelle le moteur est à l'arrêt et pendant laquelle le système électronique reste autoalimenté pour exécuter certaines fonctionnalités destinées soit à la préservation du véhicule, comme par exemple pour la fonctionnalité de refroidissement du moteur (appelé aussi post-ventilation) qui préserve les organes mécaniques, soit à la bonne marche du système comme la recopie en mémoire des anomalies détectées pendant l'utilisation du véhicule, le changement d'état des défauts déjà en mémoire, la sauvegarde des paramètres de configuration nouvellement transmis.

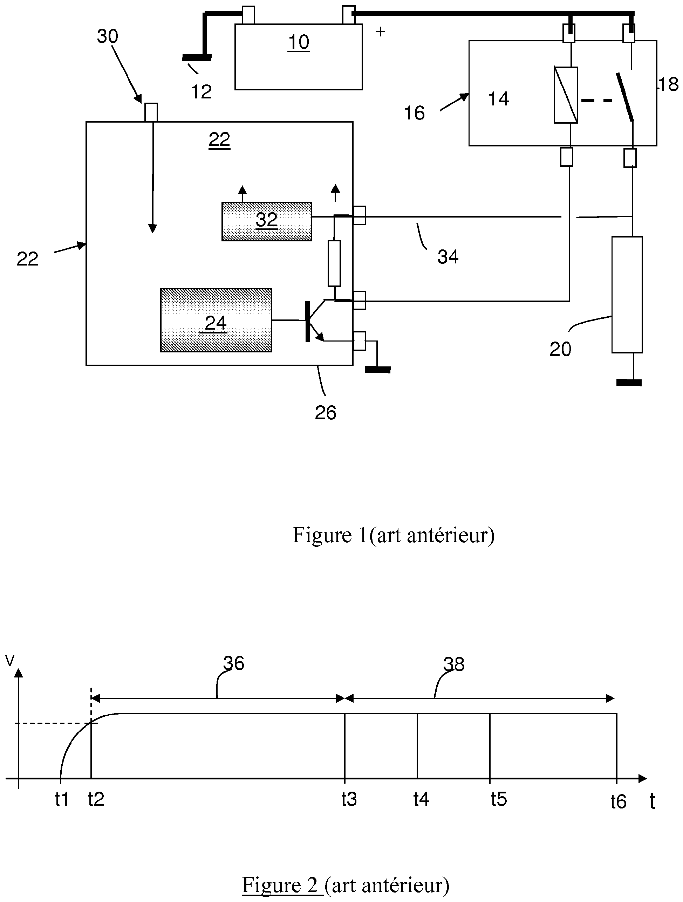

La procédure de power-latch est expliquée ci-après à l'aide des figures 1 et 2. Sur la figure 1, on a représenté une batterie 10 (habituellement de 12 V) capable de fournir la puissance nécessaire au démarrage du véhicule. Le pole négatif de la batterie est relié à la masse 12 et le pole positif est relié d'une part à une extrémité de la commande 14 d'un relai 16 et, d'autre part, à une extrémité de contact 18 du relai 16, l'autre extrémité du contact 18 étant reliée à un actionneur 20. Un calculateur 22 comporte un coeur numérique 24 relié à la commande 14 du relai par l'intermédiaire d'un transistor 26. Le coeur numérique 24 du calculateur peut être relié par une porte OU 28 au système de clé de contact 30 ou à la batterie 10 par l'intermédiaire du contact 18 du relai 16. Les autres composants du véhicule sont alimentés électriquement par les connexions 32 et une alimentation ECU 34 (Electronic Control Unit). La partie numérique du calculateur peut fonctionner généralement sous une tension égale ou même inférieure à 5V.

Lorsque l'utilisateur tourne la clé de contact 30 du véhicule, un signal est émis vers le coeur numérique 24. Sur réception de ce signal, le coeur numérique 24 commande le transistor 26 permettant de commuter le relais 16 qui fournit alors la puissance nécessaire à la fois aux actionneurs représentés symboliquement par un seul actionneur 20 et au calculateur 22 au moyen de la liaison d'alimentation ECU 34.

La figure 2 représente la tension d'alimentation V du véhicule en fonction du temps t. Sur cette figure, le temps t1 correspondant à l'introduction de la clé de contact, le temps t2 correspond au démarrage du moteur, le temps t3 à la coupure de l'alimentation électrique à l'aide la clé de contact (le temps 36 d'utilisation du véhicule s'étendant alors du temps t2 au temps t3). A partir du temps t3 commence la phase de power-latch (38) qui s'étend jusqu'au temps t6 correspondant à la coupure de l'alimentation du coeur numérique 24. Une fois démarré, le logiciel du calculateur autorise l'exécution des fonctions qui correspondent à l'utilisation du véhicule faite par le client (du temps t2 au temps t3), ce dernier temps t3 symbolisant la coupure du signal de clé de contact 30.

Cependant, lorsque l'utilisateur coupe le contact avec la clé de contact, le calculateur reste sous tension tant que son coeur numérique 24 n'ordonne pas de bloquer le transistor 26 destiné à la commande du relais 16. Pendant cette phase, dite de power-latch, le logiciel du calculateur exécute les fonctionnalités représentées entre les temps t3-t4 et t4-t5, puis réalise entre les temps t5 et t6 la copie en mémoire non volatile de certains paramètres qui seront pris en compte par le logiciel lors du prochain démarrage.

Lorsque cette phase de power latch est terminée, alors le calculateur 22, au moyen de son logiciel, bloque le transistor 26, ce qui a pour effet d'interrompre la commande 14 du relais 16 et de supprimer de fait l'alimentation des actionneurs 20 et du calculateur 22.

Dans les véhicules actuels, le logiciel de certains calculateurs, par exemple le calculateur multifonctions moteur (CMM), dispose de beaucoup de stratégies dites auto-adaptatives ; cela signifie que la stratégie est capable de déterminer automatiquement par exemple ses propres butées en fonction de l'utilisation du véhicule faite par le client ou d'adapter certains points de fonctionnement du moteur (par exemple les changements de rapport de boite de vitesses automatique) en fonction de la manière dont roule le conducteur (par exemple de manière plus ou moins sportive). La phase de power-latch permet, notamment, de sauvegarder ces butées ou autres paramètres appris automatiquement tout au long de l'utilisation du véhicule de manière à ce que le conducteur retrouve cette même adaptation dès le début du démarrage suivant.

De plus, les véhicules disposent souvent d'une fonction de « post ventilation » destinée à préserver la longévité du moteur et exécutée pendant la phase de power-latch. En effet, il est connu qu'après une utilisation prolongée du véhicule, c'est à l'arrêt du moteur qu'il existe un pic de température (température élevée) car, d'une part, le refroidissement naturel réalisé par l'entrée d'air lorsque le véhicule roule ne se fait plus et, d'autre part, parce que le moteur étant coupé, le circuit de refroidissement par eau n'est plus actif. La fonction de post ventilation est destinée à atténuer ou même à supprimer ce pic de température en actionnant une fonctionnalité appelée GMV (pour Groupe MotoVentilateur).

Une autre fonctionnalité du power-latch est de permettre de replacer automatiquement les actionneurs du système dans un état prédisposé pour le prochain démarrage afin de ne pas perdre de temps au moment de ce démarrage.

Enfin, c'est à la fin du power-latch que l'on sauvegarde les défaillances (par exemple un défaut sur un injecteur ou un fonctionnement défectueux de la sonde de température) détectés lors du cycle d'utilisation du véhicule en cours afin de permettre par exemple au véhicule de redémarrer immédiatement en mode « protégé » lors du prochain démarrage (par exemple, ne plus alimenter en carburant un injecteur qui serait bouché).

Il existe deux raisons principales pour lesquelles on recopie, pendant la phase de power latch, les paramètres enregistrés.

La première est que, lors du fonctionnement du véhicule, pour protéger le système et ses occupants, on interdit de pouvoir lire et écrire dans certaines mémoires (ou zones mémoires) car cela pourrait aboutir à une interruption complète du système nécessitant une phase de réinitialisation plus ou moins importante. Si cette phase venait à se produire pendant l'utilisation du véhicule, le conducteur pourrait se retrouver par exemple sans pouvoir accélérer alors qu'il effectue un dépassement. Ce type d'événement constitue un risque majeur pour les occupants du véhicule.

C'est le cas par exemple pour la mémoire non volatile, de type EEPROM (mémoire qui conserve les données programmées même en cas d'absence d'alimentation), utilisée en particulier pour sauvegarder la configuration du système ainsi que l'état des anomalies du système relevées lors de l'utilisation du véhicule.

De ce fait, toute écriture dans cette mémoire n'est possible qu'à la fin de la phase de power-latch dans laquelle la succession d'opérations est exécutée de manière automatique et où la seule interruption possible générée par le conducteur ne peut être qu'une simple demande de redémarrage. Pendant cette phase de power-latch, le moteur est coupé et toute sollicitation sur le levier de vitesses ou sur la pédale d'accélérateur par exemple restent sans effet sur le véhicule. Ainsi, si pendant cette phase, un problème venait à se produire au moment même de la copie des paramètres de la mémoire volatile vers la mémoire EEPROM et générait une corruption irrémédiable du système, le conducteur ne serait « simplement » plus en mesure de redémarrer la fois suivante. Il ne s'agirait là que de l'indisponibilité du véhicule alors que la sécurité des occupants aurait bien été préservée lors de l'utilisation du véhicule.

La seconde raison pour laquelle on recopie les paramètres enregistrés pendant la phase de power latch est que le développement de calculateurs moins onéreux (appelés « low-cost ») a abouti à la suppression de la mémoire EEPROM (généralement le type de mémoire le plus cher). Cependant, dans ce type de calculateur « low cost », il n'est pas possible, simultanément, d'exécuter du code d'une zone mémoire et d'écrire dans une autre zone mémoire.

Les problèmes liés à la procédure de power latch sont les suivants : en utilisation normale du véhicule, la phase de power-latch s'exécute toujours lors de la coupure d'alimentation électrique avec la clé de contact. Si le conducteur redémarre alors que la procédure de power latch ne s'est pas complètement terminée, alors elle est interrompue et le logiciel continue de travailler avec les paramètres de sa mémoire RAM non recopiés, mais qui seront sauvegardés lors de la prochaine exécution complète de la procédure de power-latch. En effet, lors de ce redémarrage, la mémoire RAM n'a pas perdu ses données puisque la coupure de l'alimentation du coeur numérique (qui est la dernière étape du power-latch) n'a pas encore eu lieu. Il n'y a ainsi aucun effet perceptible pour l'utilisateur du véhicule à ce que la phase de power-latch puisse être interrompue.

Par contre, lors de la phase de montage du véhicule sur la chaine d'assemblage, l'opérateur peut être amené à débrancher la batterie (pour intervenir en toute sécurité) alors que la phase de power-latch n'est pas obligatoirement terminée. Il est alors possible que les paramètres enregistrés dans la mémoire volatile (de type RAM par exemple) acquis depuis la dernière mise sous tension soient irrémédiablement perdus car ce type de mémoire ne permet pas la conservation des données hors alimentation.

Ceci est particulièrement pénalisant lors de la phase d'assemblage d'un véhicule où il peut exister de nombreuses phases de branchement et de débranchement de la batterie, (notamment pour assurer la sécurité des opérateurs lorsqu'ils interviennent dans le compartiment moteur) et où il convient de s'assurer de la bonne terminaison d'une procédure de power-latch pour garantir que les paramètres de configuration du logiciel transmis préalablement sont correctement inscrits dans le véhicule et que ce dernier est bien pleinement opérationnel.

Le problème de fond reste que le temps nécessaire à la pleine exécution de la phase de power-latch varie énormément en fonction de l'état dans lequel se trouve le véhicule. En effet, la procédure de power-latch sera d'autant plus longue que les défauts rencontrés sur le véhicule sont nombreux et/ou que le véhicule comporte de nombreuses fonctions gérées par calculateur (il faut alors enregistrer dans la mémoire non volatile de nombreux paramètres de configuration). Ce temps de power latch peut ainsi perturber la fluidité du flux de la chaine de montage.

Par exemple, en l'absence de défauts, ce temps pour un calculateur CMM peut être compris entre une quinzaine de secondes et plus de trente minutes pour un moteur très chaud par exemple. Par contre, dans le cas par exemple d'une sonde de température défectueuse ou mal branchée, le constructeur choisira de privilégier la sécurité du matériel et de ce fait concevra son système de manière à supposer le véhicule très chaud en cas de non acquisition de valeur plausible de la sonde de température et activera la fonction de refroidissement moteur pendant la phase de power-latch pour le préserver. Ceci conduira inexorablement à allonger le temps de power-latch (et dans le pire cas à ne jamais pouvoir le terminer). Cette conception est difficilement compatible avec le flux tendu d'une chaine d'assemblage et donc à la bonne prise en compte des opérations de configuration.

Or, lors du montage d'un véhicule, toutes les opérations ne peuvent pas toujours se poursuivre en parallèle et il faut souvent garantir la bonne exécution d'une étape pour pouvoir passer à l'étape suivante. C'est en particulier le cas pour toutes les opérations électroniques qui ne pourront pas s'exécuter correctement tant que le logiciel du calculateur n'aura pas été correctement configuré.

On connait par ailleurs du document US2002/089883A1 un procédé de prise en compte de configuration par le logiciel d'un calculateur embarqué à bord d'un véhicule conforme au préambule de la revendication 1.

Le but de la présente invention est donc de proposer un procédé permettant aux opérateurs de montage ou d'après-vente de poursuivre sans délai les étapes de mise en service des fonctions électroniques qui succèdent à celle de la configuration du logiciel.

De façon plus précise, l'invention concerne un procédé de prise en compte de paramètres de configuration par le logiciel d'un calculateur embarqué à bord d'un véhicule, conforme à l'objet de la revendication 1.

Selon un mode de mise en oeuvre avantageux, on contrôle, avant la demande de redémarrage du calculateur, que lesdits paramètres sont bien inscrits dans ladite mémoire volatile et/ou, on contrôle les paramètres dynamiques du véhicule, ladite demande de redémarrage étant ignorée si le véhicule est en roulage.

Ladite phase d'initialisation peut comporter les étapes suivantes :
- alimentation électrique dudit calculateur,
- autorisation d'accès en lecture de la mémoire non volatile,
- lecture des paramètres de configuration inscrits dans la mémoire non volatile,
- copie desdits paramètres de configuration de la mémoire non volatile vers la mémoire volatile, et
- verrouillage de la mémoire non volatile en lecture et écriture.

Ladite mémoire volatile peut être du type RAM et ladite mémoire non volatile du type EEPROM.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- les figures 1 et 2 (art antérieur) sont données pour expliquer en quoi consiste la phase de power latch ; la figure 1 montrant l'alimentation électrique d'un calculateur et la figure 2 illustrant la tension d'alimentation V du calculateur en fonction du temps t;
- la figure 3 représente un logigramme illustrant l'utilisation de l'invention sur une chaine de fabrication, et
- les figures 4a et 4b représentent les logigrammes du logiciel embarqué dans le calculateur de traitement des requêtes transmises par l'outil de communication, d'une part selon l'art antérieur (figure 4a) et d'autre part selon l'invention (figure 4b).

Selon le procédé de l'invention, les paramètres de configuration sont pris en compte sans attendre la fin de la phase de power-latch. A cette fin, le logiciel du calculateur est redémarré (ou réinitialisé) à l'aide d'une requête émise par un outil de communication, le redémarrage permettant de configurer le logiciel en tenant compte des paramètres de configuration inscrits dans sa mémoire volatile. L'outil de communication peut être connecté au réseau de communication sur lequel est connecté le calculateur, par exemple le réseau CAN ou à la ligne série bidirectionnelle K du connecteur centralisé du véhicule. L'outil de communication est capable de transmettre ladite requête destinée à demander au logiciel embarqué du calculateur d'effectuer ce redémarrage spécifique.

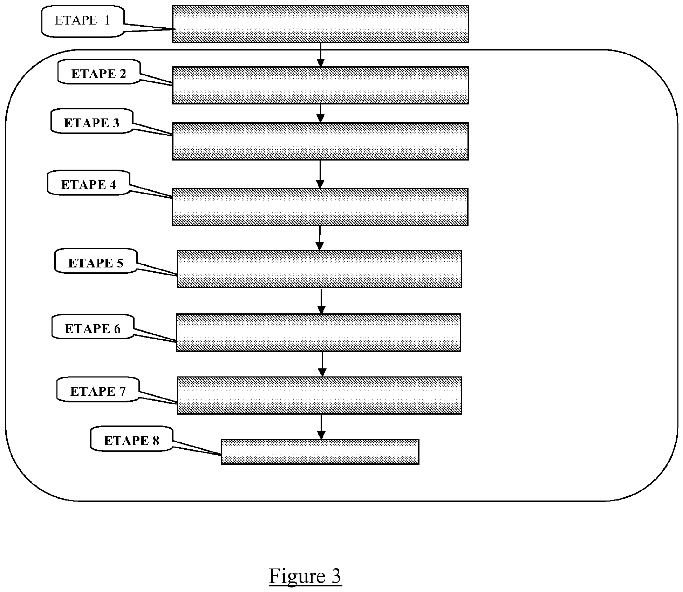

Sur la figure 3, qui représente un logigramme illustrant l'utilisation de l'invention sur une chaine de fabrication de véhicules, le constructeur reçoit les calculateurs livrés par le fournisseur (étape 1).

Les étapes suivantes 2 à 8 sont effectuées dans le flux principal de production des véhicules.

Lors de l'étape 2, le calculateur est installé dans le véhicule sur la chaine de montage.

L'étape 3 consiste à brancher la batterie du véhicule afin d'alimenter électriquement les différents calculateurs embarqués pour permettre la réalisation des opérations de mise en service des fonctionnalités électroniques, telles que le téléchargement des logiciels et des paramètres de configuration.

Lors de l'étape 4 sont réalisées les opérations de mise en service qui précèdent le télécodage (procédure permettant de configurer le logiciel d'un calculateur et de l'adapter au véhicule à produire ; cette procédure consiste souvent à activer ou désactiver des fonctionnalités telles que la climatisation ou l'ABS). Il s'agit généralement des opérations de transfert du logiciel vers le calculateur lorsque ce dernier n'est pas livré avec son logiciel adapté au véhicule et d'apprentissage de la fonction de protection du véhicule contre le vol. Lors de cette étape, le véhicule est entrainé sur la chaine et n'est pas encore capable de se déplacer par ses propres moyens.

Lors de l'étape 5 est réalisée une opération de mise en service électronique du télécodage consistant à transmettre au calculateur les paramètres nécessaires à la configuration du logiciel du calculateur en rapport avec les références du calculateur. Ces paramètres sont mémorisés dans la mémoire volatile (de type RAM) du calculateur et ne peuvent être recopiés en EEPROM qu'à la fin d'une procédure de power-latch.

A l'étape 6, une requête de redémarrage du logiciel est transmise au calculateur par l'outil de communication selon un mode spécifique consistant à prendre en compte les paramètres transmis lors de l'étape 5. Cette requête peut être transmise selon l'un des standards de communication connus, comme par exemple KeyWord Protocol 2000 ou Unified Diagnostic Services, sur ligne série bidirectionnelle K ou réseau CAN en fonction de l'architecture retenue pour le véhicule concerné.

Selon un mode de réalisation particulier, cette demande ne sera prise en compte par le logiciel qu'après une opération de vérification, d'une part, que des nouveaux paramètres de configuration valides ont préalablement été transmis et, d'autre part, que les paramètres dynamiques du véhicule sont bien dans l'état attendu afin de s'assurer par exemple que cette demande n'intervient pas pendant la phase d'utilisation du véhicule.

Pour la vérification de la réception préalable de paramètres de configuration, le système peut disposer d'un marqueur en mémoire positionné à non valide par défaut et valide après réception de la requête de configuration (écriture des paramètres dans le segment mémoire RAM réservé à cet effet).

Pour la vérification des paramètres dynamiques du véhicule, les deux critères suivants pourront, au minimum, être respectés :
- la vitesse véhicule égale à 0 km/h ou proche du seuil d'entrainement de la chaine de production ;
- le régime moteur égal à 0 tr/min signifiant que le moteur est bien arrêté.

Lors de l'étape 7, la suite des opérations de mise en service des fonctions électroniques peut être réalisée car le logiciel du calculateur est bien configuré et peut donc exécuter les fonctionnalités demandées.

Enfin, le moteur du véhicule est démarré, lui permettant de quitter la chaine de production par ses propres moyens.

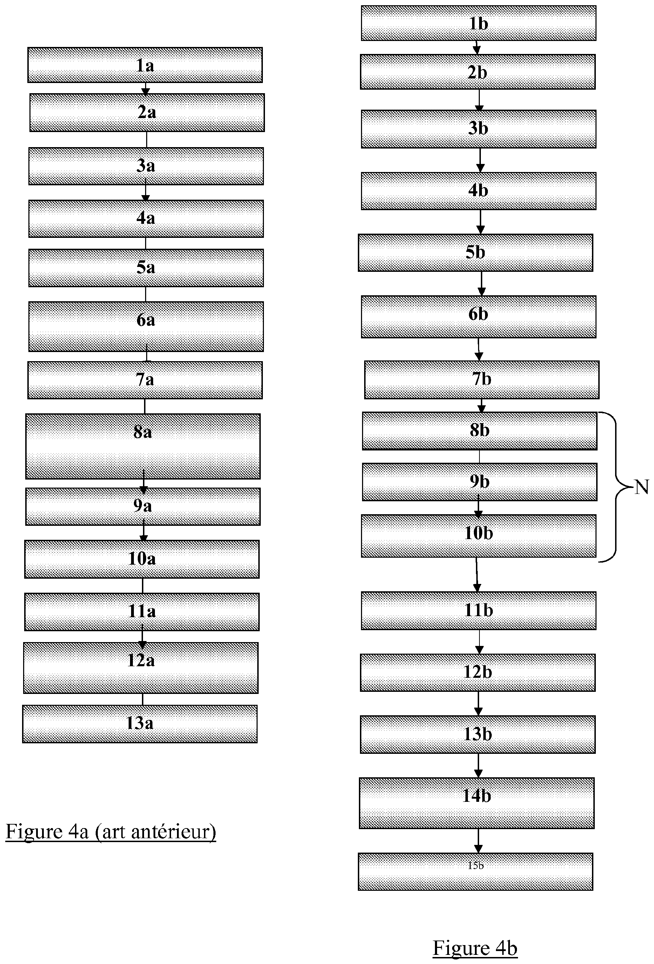

L'étape 6 de redémarrage spécifique sera mieux comprise à l'aide des schémas des figures 4 dans lesquelles on a représenté le fonctionnement du calculateur dans l'état de l'art connu (figure 4a) et le fonctionnement du calculateur selon l'invention (figure 4b).

Dans l'état de l'art connu de la technique (figure 4a), lorsqu'on procède à un télécodage du calculateur, on le met sous tension (étape 1a) par exemple en tournant la clé de contact. Le calculateur dispose, dans sa mémoire RAM, d'un segment SEG_1 dans lequel le logiciel recopie les paramètres de configuration lus dans le segment réservé SEG_EEPROM de la mémoire EEPROM. La phase d'initialisation du système, déclenchée par la mise sous tension du calculateur, est représentée par les étapes 2a à 6a incluse. Lorsque le calculateur reçoit, au cours du montage du véhicule, une requête de configuration contenant de nouveaux paramètres, ces derniers sont d'abord inscrits dans un nouveau segment SEG_2 en RAM et ne seront recopiés qu'à la fin de la phase de power-latch sur le segment SEG_EEPROM après coupure de l'alimentation par la clef de contact car au moment de la réception de la requête, la mémoire EEPROM n'est pas accessible.

Lors de la prochaine mise sous tension du calculateur, les nouveaux paramètres de SEG_EEPROM seront recopiés dans le SEG_1 de la mémoire RAM et seront bien utilisés par le logiciel.

De façon synoptique, les différentes étapes sont les suivantes :
- étape 2a : autorisation d'accès en lecture à la mémoire EEPROM ;
- étape 3a : lecture des paramètres de configuration inscrits en EEPROM ;
- étape 4a : recopie des paramètres de configuration EEPROM en RAM ;
- étape 5a : verrouillage de l'EEPROM en lecture/écriture ;
- étape 6a : utilisation du fonctionnel (c'est-à-dire configuration du logiciel) en tenant compte des paramètres de configuration inscrits dans la mémoire RAM ;
- étape 7a : réception des nouveaux paramètres de configuration ;
- étape 8a : poursuite de l'exécution du logiciel en tenant compte des anciens paramètres de configuration de la RAM ;
- étape 9a : coupure de l'alimentation par la clé de contact ;
- étape 10a : exécution des fonctions 1 à n avec la procédure de power latch ;
- étape 11a : autorisation de lecture/écriture de la mémoire EEPROM ;
- étape 12a : recopie des nouveaux paramètres de configuration de la RAM vers la mémoire EEPROM ;
- étape 13a : extinction totale du calculateur.

Pour réaliser un nouveau télécodage selon le procédé de l'invention (figure 4b), lorsqu'on met sous tension le calculateur (étape 1b), ce dernier procède au début de la même façon qu'auparavant, les étapes 1b à 7b étant identiques aux étapes 1a à 7a. Le calculateur recopie donc dans le SEG_1 de la mémoire RAM les paramètres de configuration lus dans le segment réservé SEG_EEPROM de la mémoire EEPROM. Puis lorsqu'il reçoit, par exemple au cours du montage du véhicule, une requête de configuration contenant les nouveaux paramètres, ces derniers sont inscrits dans un nouveau segment SEG_2 dans la mémoire RAM. A ce moment précis, le logiciel du calculateur est toujours configuré selon les paramètres présents dans le segment SEG_1 de la mémoire RAM.

Le procédé de l'invention se distingue de l'art antérieur par les étapes nouvelles 8b à 10b. Ces étapes sont :
- étape 8b : réception par le calculateur de la requête de démarrage spécifique ;
- étape 9b : contrôle des paramètres dynamiques du véhicule ;
- étape 10b: poursuite de l'exécution du logiciel client en tenant compte des nouveaux paramètres de configuration de la RAM.

Après avoir reçu la requête de redémarrage spécifique (étape 8b), le calculateur contrôle (étape 9b) le segment mémoire SEG_2 pour savoir s'il contient bien des paramètres valides puis contrôle également les paramètres dynamiques du véhicule pour vérifier que le véhicule n'est pas en fonctionnement et procède lorsque ces contrôles sont positifs à une recopie des paramètres du segment SEG_2 vers le segment SEG_1 de la RAM. Il réalise enfin une nouvelle initialisation (étape 10b) sans procéder à la recopie du segment SEG_EEPROM vers le segment SEG_1 de la RAM comme ce sera le cas lors d'une prochaine mise sous tension du calculateur à l'aide de la clef de contact.

On notera que la réception d'une requête spécifique de démarrage peut se produire plusieurs fois (le nombre de fois dépendant du fonctionnel).

Les étapes suivantes 11b à 15b sont identiques aux étapes 9a à 13a.

On conçoit ainsi que le logiciel du calculateur va poursuivre son exécution en tenant compte des nouveaux paramètres de configuration transmis et permettre ainsi la poursuite des opérations de mise en service des fonctions électroniques sans attendre la fin d'exécution de la procédure de power-latch, contribuant ainsi à réduire le temps à réserver dans le flux principal de la chaine de montage pour les opérations de téléchargement et télécodage du logiciel.

De plus, la poursuite de ces opérations est réalisée automatiquement, c'est-à-dire sans la présence nécessaire d'un opérateur pour couper l'alimentation par la clé de contact. Lorsque l'opération ou les opérations suivantes seront réalisées, et après déplacement du véhicule par ses propres moyens, la prochaine coupure de l'alimentation par la clé de contact permettra la recopie du segment SEG_2 de la mémoire RAM vers le segment SEG_EEPROM en toute fin de la phase de power-latch, figeant ainsi les paramètres de configuration du logiciel dans une mémoire non volatile.

La présente invention permet, dans le flux de fabrication d'une usine d'assemblage de véhicules, et dans le but d'enchainer plus rapidement la suite des opérations de mise en service du produit d'une part de diminuer le temps nécessaire à la prise en compte de la configuration du logiciel d'un calculateur embarqué lorsque ce dernier est muni d'une fonctionnalité de power-latch, et d'autre part, de supprimer l'intervention manuelle d'un opérateur sur la clé de contact pour poursuivre la suite des opérations.

D'autres modes de réalisation que ceux décrits et représentés peuvent être conçus par l'homme du métier sans sortir du cadre de la présente invention.

## Revendications

1. Procédé de prise en compte de paramètres de configuration par le logiciel d'un calculateur embarqué à bord d'un véhicule, selon lequel, après une phase d'initialisation du calculateur, lesdits paramètres sont inscrits dans une mémoire volatile (4a), ledit procédé étant **caractérisé en ce que** lesdits paramètres sont copiés dans une mémoire non volatile pendant une phase de power-latch qui suit la coupure de l'alimentation électrique du véhicule, et **en ce qu'**après réception desdits paramètres de configuration par la mémoire volatile, une requête est envoyée au calculateur lui commandant de redémarrer (8b) en tenant compte desdits paramètres enregistrés dans sa mémoire volatile, et le calculateur tient compte desdits paramètres immédiatement après l'exécution de ladite requête (10b).

2. Procédé selon la revendication 1 **caractérisé en ce que**, avant la demande de redémarrage du calculateur, on contrôle (9b) que lesdits paramètres sont bien inscrits dans ladite mémoire volatile.

3. Procédé selon l'une des revendications précédentes **caractérisé en ce que**, avant la demande de redémarrage du calculateur, les paramètres dynamiques du véhicule sont contrôlés (9b) et ladite demande de redémarrage est ignorée si le véhicule est en roulage.

4. Procédé selon l'une des revendications précédentes **caractérisé en ce que** ladite phase d'initialisation comporte les étapes suivantes :
- alimentation électrique dudit calculateur (1b),
- autorisation d'accès en lecture de la mémoire non volatile (2b),
- lecture des paramètres de configuration inscrits dans la mémoire non volatile (3b),
- copie desdits paramètres de configuration de la mémoire non volatile vers la mémoire volatile (4b), et
- verrouillage de la mémoire non volatile en lecture et écriture (5b).

5. Procédé selon l'une des revendications précédentes **caractérisé en ce que** ladite mémoire volatile est du type RAM.

6. Procédé selon l'une des revendications précédentes **caractérisé en ce que** ladite mémoire non volatile est du type EEPROM.

## Patentansprüche

1. Verfahren zum Berücksichtigen von Konfigurationsparametern durch die Software eines Bordrechners eines Fahrzeugs, gemäß dem, nach einer Initialisierungsphase des Rechners, die Parameter in einen flüchtigen Speicher (4a) geschrieben werden, Verfahren **dadurch gekennzeichnet, dass** die Parameter während einer Power-Latch-Phase, die auf das Abschalten der Stromversorgung des Fahrzeugs folgt, in einen nichtflüchtigen Speicher kopiert werden, und dass nach Empfang der Konfigurationsparameter durch den flüchtigen Speicher eine Anfrage an den Rechner gesendet wird, die ihm befiehlt, unter Berücksichtigen der in seinem flüchtigen Speicher aufgezeichneten Parameter neu zu starten, und der Rechner die Parameter unmittelbar nach der Ausführung der Anfrage (10b) berücksichtigt.

2. Verfahren nach Anspruch 1, **dadurch gekennzeichnet, dass** vor der Anfrage zum Neustarten des Rechners kontrolliert wird (9b), dass die Parameter tatsächlich in die den flüchtigen Speicher geschrieben sind.

3. Verfahren nach einem der vorhergehenden Ansprüche, **dadurch gekennzeichnet, dass** die dynamischen Parameter des Fahrzeugs vor der Anfrage zum Neustarten des Rechners kontrolliert werden (9b) und die Anfrage zum Neustarten ignoriert wird, falls das Fahrzeug fährt.

4. Verfahren nach einem der vorhergehenden Ansprüche, **dadurch gekennzeichnet, dass** die Initialisierungsphase die folgenden Schritte umfasst:
- Versorgung mit Strom des Rechners (1b),
- Lesezugriffsgenehmigung auf den nichtflüchtigen Speicher (2b),
- Lesen der Konfigurationsparameter, die in den nichtflüchtigen Speicher geschrieben sind (3b),
- Kopieren der Konfigurationsparameter von dem nichtflüchtigen Speicher zu dem flüchtigen Speicher (4b), und
- Blockieren des nichtflüchtigen Speichers für Lesen und Schreiben (5b).

5. Verfahren nach einem der vorhergehenden Ansprüche, **dadurch gekennzeichnet, dass** der flüchtige Speicher vom Typ RAM ist.

6. Verfahren nach einem der vorhergehenden Ansprüche, **dadurch gekennzeichnet, dass** der nichtflüchtige Speicher vom Typ EEPROM ist.

## Claims

1. A method for the software of a computer onboard a vehicle to take configuration parameters into account, according to which, after a computer initialization phase, said parameters are written in a volatile memory (4a), said method being **characterized in that** said parameters are copied in a non-volatile memory during a power-latch phase which follows the cut-off of the electrical supply of the vehicle, and **in that** after reception of said configuration parameters by the volatile memory, a request is sent to the computer instructing it to restart (8b), taking into account said parameters recorded in its volatile memory, and the computer takes said parameters into account immediately after the execution of said request (10b).

2. The method according to claim 1, **characterized in that**, before the request for restarting of the computer, a check is carried out (9b) that said parameters are indeed written in said volatile memory.

3. The method according to one of the preceding claims, **characterized in that**, before the request for restarting the computer, the dynamic parameters of the vehicle are checked (9b) and said restarting request is ignored if the vehicle is travelling.

4. The method according to one of the preceding claims, **characterized in that** said initialization phase comprises the following steps:
- electrical supplying of said computer (1b),
- read access authorization of the non-volatile memory (2b),
- reading of the configuration parameters written in the non-volatile memory (3b),
- copy of said configuration parameters of the non-volatile memory to the volatile memory (4b), and
- locking of the non-volatile memory in reading and writing (5b).

5. The method according to one of the preceding claims, **characterized in that** said volatile memory is of the RAM type.

6. The method according to one of the preceding claims, **characterized in that** said non-volatile memory is of the EEPROM type.
